# FASCICULE DE BREVET EUROPEEN

(11) **EP 1 025 742 B1**
(45) Date de publication et mention de la délivrance du brevet: **07.01.2004**
(21) Numéro de dépôt: 98946521.6
(22) Date de dépôt: 28.09.1998
(51) Int. Cl.: H04Q 11/04, H04L 1/02, H04L 1/22

(54) **PROCEDE DE SECURISATION DE LA TRANSMISSION DE CELLULES D'UN SYSTEME DE TELECOMMUNICATION**
VERFAHREN ZUR SICHEREN ÜBERTRAGUNG VON ZELLEN EINES TELEKOMMUNIKATIONSSYSTEMS
METHOD FOR SAFE TRANSMISSION OF A TELECOMMUNICATION SYSTEM CELLS

(30) Priorité: 14.10.1997 FR 9713076
(43) Date de publication de la demande: 09.08.2000
(73) Titulaire: FRANCE TELECOM SA, 75015 Paris (FR)
(72) Inventeur: BATTISTELLO, Patrick, F-22700 Perros-Guirec (FR); JAILLARD, André, F-22300 Lannion (FR)
(74) Mandataire: Maillet, Alain
(86) Numéro de dépôt international: PCT/FR1998/002080
(87) Numéro de publication internationale: WO 1999/020076

(56) Documents cités:
- EP-A- 0 566 241
- EP-A- 0 696 111
- US-A- 5 440 565
- US-A- 5 621 722
- HIDEO TATSUNO ET AL: "HITLESS PATH PROTECTION SWITCHING TECHNIQUES FOR ATM NETWORKS" ELECTRONICS & COMMUNICATIONS IN JAPAN, PART I - COMMUNICATIONS, vol. 77, no. 8, 1 août 1994, pages 13-23, XP000485780
- HIROSHI OHTA ET AL: "HITLESS LINE PROTECTION SWITCHING METHOD FOR ATM NETWORKS" PROCEEDINGS OF THE INTERNATIONAL CONFERENCE ON COMMUNICATIONS (ICC), GENEVA, MAY 23 - 26, 1993, vol. 1, 23 mai 1993, pages 272-276, XP000371105 INSTITUTE OF ELECTRICAL AND ELECTRONICS ENGINEERS

## Description

La présente invention concerne un procédé de sécurisation de la transmission de cellules d'un système de télécommunication, notamment un système de télécommunication à large bande, tel que le réseau à large bande dit RNIS à large bande prévu pour transmettre des cellules ATM (Asynchronous Transfer Mode). Plus précisément, le procédé de l'invention est relatif à la sous-couche Transmission de Convergence (TC) de tout système de transmission ATM et peut s'appliquer, en particulier, aussi bien aux systèmes dits SONET/SDH qu'aux systèmes dits orientés cellules (Cell-Based) tels que ceux qui sont décrits dans la Recommandation IUT-T I.432.

On rappelle que le modèle de référence de protocole PRM (*Protocol reference model*) du RNIS à large bande prévoit une couche physique qui est elle-même subdivisée en deux sous-couches qui sont respectivement la sous-couche de média physique (PM : *physical medium*) et la sous-couche de convergence au niveau transmission (TC : *transmission convergence*). La sous-couche PM inclut les fonctions qui ne dépendent que du support physique utilisé. Quant à la sous-couche TC, elle recouvre les fonctions de génération et de récupération des trames, d'adaptation à la trame de transmission, de délimitation des cellules, de génération du code de contrôle d'erreur dit HEC (Header *Error Control*), et les fonctions d'adaptation de débit. Ainsi, la sous-couche convergence au niveau transmission TC assure, du côté émetteur, les fonctions binaires nécessaires à la transmission des cellules ATM sur le support physique et, du côté récepteur, les fonctions nécessaires à l'extraction des cellules ATM du flot binaire reçu.

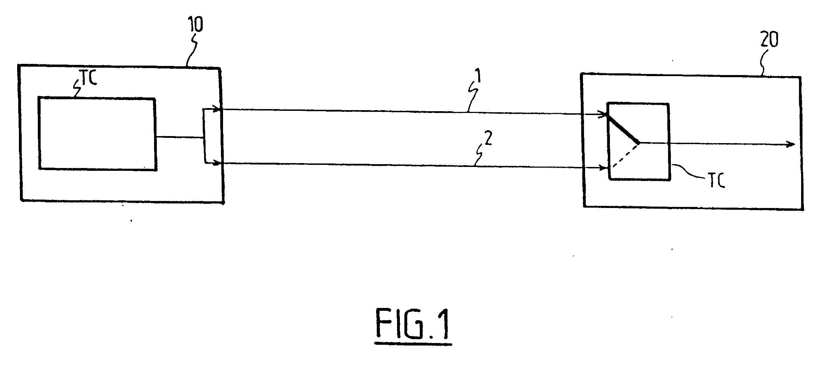

Dans les réseaux, le support physique pouvant être soumis à diverses perturbations, il se peut que les cellules ATM soient erronées à la réception et donc doivent être détruites. Afin de diminuer le taux de perte, et augmenter la qualité de la transmission, on a déjà proposé un procédé qui consiste à doubler le support physique, c'est-à-dire à utiliser deux liens de transmission au lieu d'un seul. Un tel procédé est maintenant décrit en relation avec la Fig. 1.

Sur cette Fig. 1, on voit un émetteur 10 dont la sous-couche de Transmission de Convergence TC réalise les fonctions nécessaires pour transmettre les cellules ATM en flot binaire simultanément sur deux liens 1 et 2. On voit également un récepteur 20 dont la sous-couche TC extrait normalement les cellules du premier lien 1 mais, en cas d'indisponibilité de premier lien 1, commute sur le second lien 2 afin d'en extraire les cellules.

On notera que la fonction de détermination des erreurs des cellules portées par les liens 1 et 2 et la fonction de commutation sont prises en charge par la sous-couche de convergence TC du récepteur 20.

L'inconvénient de ce procédé est essentiellement lié à la commutation entre les deux liens 1 et 2 qui n'est pas instantanée, ce qui entraîne la perte de données pendant le templde commutation.

Le document EP-A-0 696 111 divulgue un dispositif et un procédé de commutation de route sans parasite.

Un procédé proposé à la conférence IEICE du 27 au 30 mars 1995 et présenté par Hiroshi Ohta et Hitoshi Uematsu consiste en ce que la sous-couche Transmission de Convergence (TC) de l'émetteur réalise les fonctions nécessaires pour transmettre les cellules ATM simultanément sur deux liens et en ce que deux sous-couches TC du récepteur réalisent respectivement les fonctions d'extraction des cellules ATM à partir des données reçues des deux liens. Du fait que les liens principal et secondaire ont *a priori* des longueurs différentes, un mécanisme est prévu dans le récepteur pour compenser la différence de délai de transmission entre les flux issus des deux liens, et pour ainsi resynchroniser ces flux de cellules ATM. Lorsque le récepteur détecte une cellule incorrecte sur le lien principal, le mécanisme commute alors sur le lien secondaire. Mais contrairement au cas précédent, et pour résoudre le problème évoqué ci-dessus, la commutation se fait sur la cellule précédant cette cellule erronée, si bien qu'il n'y a pas de délai de commutation. On notera que la même règle s'applique au lien secondaire.

Ce procédé antérieur présente l'avantage de réaliser la commutation entre deux liens de transmission sans perte de cellules ATM. En effet, les cellules ATM reçues sur chacun des liens sont mises en phase pour compenser la différence de délai de transmission entre les deux liens, et dès que le systeme détecte des erreurs sur un des liens, il bascule sur l'autre en se calant sur la cellule qui précède celle où l'erreur a été détectée.

Néanmoins, lorsque le récepteur détecte une cellule erronée sur un des liens, il commute sur le second, mais rien ne garantit que celui-ci soit effectivement disponible.

Le but de l'invention est donc de proposer un procédé de sécurisation de la transmission de cellules d'un systeme de télécommunication de sécurisation tel que celui qui vient d'être décrit mais qui n'en présente pas l'inconvénient mentionné ci-dessus.

Pour ce faire, ledit procédé consiste, côté émetteur, à insérer, régulièrement dans chacun desdits flux, des cellules servant de marqueurs et délimitant ainsi des blocs de cellules ou des ensembles de blocs de cellules, et, côté récepteur, à sélectionner, bloc après bloc ou groupe de blocs après groupe de blocs, le bloc ou le groupe de blocs du flux de cellules qui présente le moins d'erreurs de transmission par rapport au bloc ou au groupe de blocs de même numéro d'ordre de l'autre flux.

Selon une autre caractéristique de l'invention, il consiste à délimiter des blocs ou ensembles de blocs comportant chacun une cellule physique contenant des informations concernant les erreurs dans ledit bloc ou dans chacun desdits blocs dudit ensemble et en ce qu'il consiste à sélectionner le bloc ou le groupe de blocs de l'un desdits flux dont l'examen des informations d'erreurs le concernant contenues dans ladite cellule physique montre qu'il présente le moins d'erreurs.

Selon une autre caractéristique de l'invention, il consiste à utiliser lesdites cellules physiques contenant les informations d'erreurs en tant que cellules servant de marqueur de bloc ou d'ensemble de blocs.

Selon une autre caractéristique de l'invention. lorsque le procédé de sécurisation selon l'invention est appliqué à un système de télécommunication dont la transmission des cellules sur chacun des liens se fait en mode cellules (cell based), il consiste à utiliser en tant que cellules servant de marqueur de bloc ou d'ensemble de blocs, les cellules dites OAM F3.

Selon une autre caractéristique de l'invention, il consiste :
· si les deux blocs ou deux groupes de blocs appartenant respectivement aux deux liens sont jugés corrects, à choisir indifféremment l'un ou l'autre bloc ou groupe de blocs,
· si le bloc ou le groupe de blocs porté par le premier lien est jugé correct alors que le bloc ou le groupe de blocs qui est porté par le second lien est jugé incorrect, à sélectionner le bloc ou le groupe de blocs porté par le premier lien,
· si, réciproquement, le bloc ou le groupe de blocs porté par le second lien est jugé correct alors que le bloc ou le groupe de blocs porté par le premier lien est jugé incorrect, à sélectionner le bloc ou le groupe de blocs porté par le second lien, et, enfin
· si les deux blocs ou les deux groupes de blocs sont jugés incorrects, à utiliser un autre processus de sélection que le processus de sélection bloc à bloc ou groupe de blocs à groupe de blocs.

Par exemple, selon une autre caractéristique de l'invention, ledit autre processus de sélection consiste à effectuer une sélection dite cellule par cellule pour chaque cellule contenue dans chacun desdits deux blocs. Par exemple, ledit processus de sélection cellule à cellule consiste à sélectionner la cellule de l'un ou l'autre lien qui comporte le moins d'erreurs dans son en-tète. Avantageusement, ladite sélection cellule à cellule est basée sur l'utilisation du syndrome du champ dit HEC contenu dans l'entête de chacune des cellules.

Selon une autre caractéristique de l'invention, ladite sélection cellule à cellule est basée sur l'utilisation, d'une part, du syndrome du champ dit HEC contenu dans l'entête de la cellule courante et, d'autre part, du syndrome du champ dit HEC contenu dans l'en-tête de la cellule suivante.

Selon une autre caractéristique de l'invention, ladite sélection cellule à cellule consiste à :
· si les syndromes HEC(C_{N,1}) et HEC(C_{N,2}) sont égaux et s'il en est de même des syndromes HEC(C_{N+1,1}) et HEC(C_{N+1,2}), choisir indifféremment l'une ou l'autre cellule,
· si les syndromes HEC(C_{N,1}) et HEC(C_{N,2}) sont égaux alors que la comparaison du syndrome HEC(C_{N-1,1}) avec le syndrome HEC(C_{N+1,2}) montre que la cellule (C_{N+1,1}) sur le premier lien est moins erronée que la cellule (C_{N + 1,2}) sur le second lien, sélectionner la cellule C_{N,1},
· si les syndromes HEC(C_{N,1}) et HEC(C_{N,2}) sont égaux alors que la comparaison du syndrome HEC(C_{N+1,1}) avec le syndrome HEC(C_{N+1,2}) montre que la cellule (C_{N+1,1}) sur le premier lien est plus erronée que la cellule (C_{N - 1,2}) sur le second lien, sélectionner la cellule C_{N,2}
· si la comparaison du syndrome HEC(C_{N,1}) avec le syndrome HEC(C_{N,2}) montre que la cellule (C_{N,1}) sur le premier lien est moins erronée que la cellule (C_{N,2}) sur le second lien, sélectionner la cellule (C_{N,1}), et enfin
· si la comparaison du syndrome HEC(C_{N,1}) avec le syndrome HEC(C_{N,2}) montre que la cellule (C_{N,1}) sur le premier lien est plus erronée que la cellule (C_{N,2}) sur le second lien, sélectionner la cellule (C_{N,2}),

HEC(C_{N,X}) étant la fonction dont la valeur est représentative du nombre de bits erronés dans l'entète de la cellule d'ordre N dans le bloc considéré et x étant le numéro du lien sur lequel ladite cellule est portée.

Selon une autre caractéristique de l'invention, dans le cas où la sélection bloc à bloc ou groupe de blocs à groupe de blocs n'est pas utilisée à un moment donné, il consiste à effectuer une sélection cellule à cellule.

Selon une autre caractéristique de l'invention, il consiste, côté émetteur, à insérer régulièrement dans chacun desdits flux, des cellules possèdant un numéro d'ordre lequel est utilisé pour synchroniser les flux issus respectivement des deux liens.

Les caractéristiques de l'invention mentionnées ci-dessus, ainsi que d'autres, apparaîtront plus clairement à la lecture de la description suivante d'un exemple de réalisation faite en relation avec les dessins joints parmi lesquels :
la Fig. 1 représente un système de transmission utilisant un procédé de sécurisation selon l'état de la technique,
la Fig.2 représente un système de transmission utilisant un procédé de sécurisation selon la présente invention, et
la Fig. 3 est un schéma illustrant un procédé de sécurisation selon la présente invention.

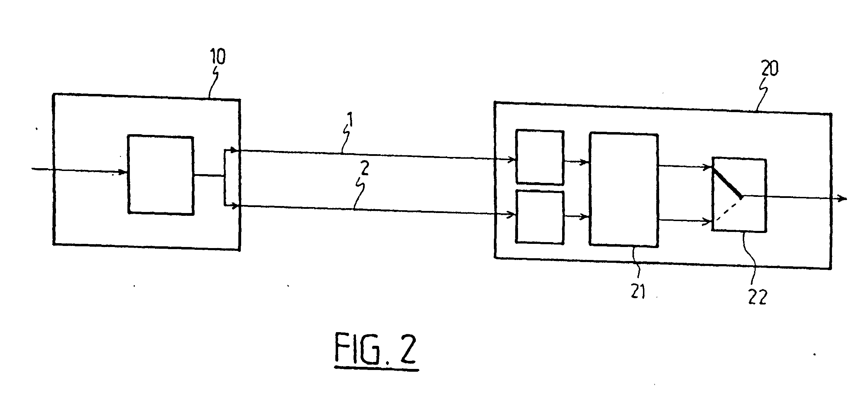

Le procédé de la présente invention est illustré au moyen de la Fig. 2 sur laquelle on peut voir un émetteur 10 comportant une unité TC assurant les fonctions de la sous-couche de convergence de transmission TC. Cette unité TC reçoit un flux de cellules ATM et le prépare pour sa transmission simultanée sur deux liens de transmission 1 et 2.

On voit également un récepteur 20 qui est pourvu de deux unités TC 1 et TC2 qui assurent, chacune, les fonctions de la sous-couche de convergence de transmission. En particulier, chaque unité TC 1, TC2 extrait les cellules transmises du flux de données reçu sur le lien 1, 2 correspondant et les délivre en sortie.

Le mode de transmission sur les liens 1 et 2 peut par exemple ètre un mode de transmission synchrone du type SDH (*Synchronous Digital Hierarchy*) selon lequel les cellules sont arrangées en trames. On pourra se reporter aux avis G.707 à 709 de l'UIT-T pour une définition des spécifications de ce mode de transmission.

Le mode de transmission peut également être un mode de transmission dit "orienté cellule" ou *cell based* selon lequel les cellules sont arrangées selon un flux continu. Des cellules de la couche physique, c'est-à-dire des cellules qui ne sont pas prises en compte au niveau de la couche ATM, sont insérées après un certain nombre de cellules de la couche ATM (dites cellules ATM). Ces cellules de la couche physique peuvent être soit des cellules vides, soit des cellules OAM (*Operation, Administration and Maintenance*). Ces dernières sont utilisées pour véhiculer des informations concernant l'exploitation, l'administration et la maintenance d'une interface. Dans un flux de cellules transmis selon le mode de transmission orienté cellule, les cellules OAM de la couche physique sont insérées de maniere périodique, c'est-à-dire que le nombre de cellules ATM entre deux cellules OAM consécutives est constant.

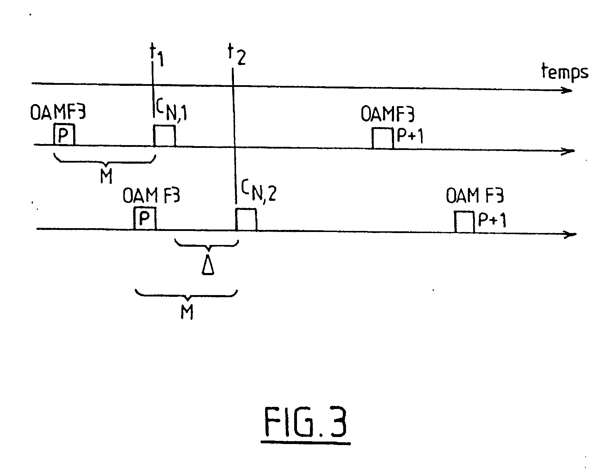

Les cellules délivrées par l'un et l'autre liens sont alignées dans un dispositif de synchronisation de cellules 21. On va maintenant décrire en relation avec la Fig. 3, le processus d'alignement des cellules de l'invention.

On va considérer une cellule ATM C_{N} quelconque qui est émise à l'instant t par la sous-couche de convergence TC de l'émetteur 10. A sa réception du lien 1 par l'unité TC1 assurant les fonctions de la sous-couche de convergence, cette cellule C_{N} est extraite à l'instant t1 par la même unité de sous-couche de convergence TC1 et la cellule C_{N,1} est délivrée par l'unité TC1. De même, à sa réception du lien 2 par l'unité TC2, cette cellule C_{N} est extraite à l'instant t2 par la même unité de sous-couche de convergence TC2 et la cellule C_{N,2} est délivrée par l'unité TC2. Les deux liens 1 et 2 ayant *a priori* et généralement des longueurs différentes, les instants t1 et t2 sont généralement différents. A la Fig. 3, l'instant t 1 est antérieur à l'instant t2. Cela résulte du fait que le lien 1 est plus court que le lien 2.

Le dispositif de synchronisation de cellules 21 est pourvu d'une mémoire dans laquelle sont stockées les cellules du lien le plus court. En effet, afin de synchroniser les cellules reçues sur les deux liens 1 et 2, la cellule C_{N,1} devra attendre la réception de Δ cellules avant la réception de la cellule correspondante C_{N,2}. La mémoire dudit dispositif de synchronisation 21 doit permettre le stockage d'au moins Δ cellules. Ainsi, pour déterminer cette capacité de mémoire, on devra considérer la différence de temps t2-t1 que l'on veut être en mesure de traiter. Or, cette différence de temps dépend à la fois de la différence de longueur entre les deux liens 1 et 2 mais aussi du débit de la transmission sur les liens 1 et 2. On comprendra que la mémorisation des cellules permet de compenser la différence de délai de transmission entre les deux liens.

Pour aligner les cellules, on va utiliser des marqueurs temporels. Pour ce faire, lorsque le mode de transmission sur les liens 1 et 2 correspond au mode de transmission dit Cell-Based, on utilise en tant que marqueurs temporels les cellules de niveau physique OAM F3 Comme cela a été explicité précédemment, ces cellules OAM F3 sont insérées de façon périodique dans le flux de cellules ATM, c'est à dire que le nombre de cellules entre deux cellules OAM F3 consécutives est constant. De plus, les cellules de niveau physique OAM F3 comportent un champ dans lequel est indiqué leur numéro d'ordre, ce qui permet de les différencier entre elles.

De cette manière, on sait que la cellule C_{N,2} qui arrive M cellules après la cellule OAM F3 numérotée P sur le lien 2 est l'image de la cellule C_{N,1} qui est arrivée M cellules après la cellule OAM F3 numérotée P sur le lien 1.

Lorsque les modes de transmission sur les liens 1 et 2 ne sont pas le mode dit Cell-Based, mais par exemple le mode de transmission SDH, on insérera, de façon périodique, des cellules OAM F3 ou tout autre type de cellules comportant un numéro d'ordre et pouvant servir de marqueurs temporels dans le flux de cellules.

Chaque flux de cellules délivré par le dispositif de synchronisation 21 est délivré à une entrée d'un dispositif de sélection 22 lequel délivre à son tour un flux de cellules de niveau ATM.

Selon un premier mode de réalisation de l'invention, un bloc de cellules est défini comme étant l'ensemble des cellules qui est compris entre deux cellules OAM F3 consécutives. A la Fig. 3, un bloc de cellules est par exemple l'ensemble des cellules comprises entre la cellule OAM F3 de numéro P et la cellule OAM F3 de numéro P+ 1. Les cellules OAM F3 étant insérées périodiquement, chaque bloc a une taille constante. On notera que chaque bloc peut contenir des cellules de niveau ATM, des cellules de la couche ATM non-assignées dites, en terminologie anglo-saxonne «Unassigned», ainsi que des cellules de la couche physique telles que les cellules inactives dites «Idle» qui sont utilisées pour l'adaptation du débit cellulaire. Le dispositif de sélection 22 considère alors dans chaque flux issu du dispositif de synchronisation 21, les blocs de cellules délimités par les éellules OAM F3. Les cellules OAM F3 contiennent des champs de contrôle de parité indiquant si des erreurs de transmission se sont produites dans un bloc de cellules. La validité du bloc de cellules qui suit la cellule OAM F3 de numéro P est déterminée à la réception et au moyen de la cellule OAM F3 de numéro P+1.

On rappelle que les cellules ATM sont constituées d'un en-tête comportant cinq octets suivis d'un champ d'information utilisateur constitué de 48 octets. Les champs de contrôle présents dans les cellules OAM F3 permettent d'établir la validité des informations transportées par la charge utile ou champ d'information des cellules ATM du bloc. Quant à la validité de l'en-tête de chaque cellule, elle est déterminée à partir d'un champ spécifique que cet en-tête contient, dit également champ HEC (Header Error Check). Ce champ est composé d'un octet qui est le dernier de l'en-tète de chaque cellule.

Selon l'invention, pour chaque lien de transmission, un bloc de cellules est mémorisé après réception d'une cellule OAM F3, par exemple de numéro P, jusqu'à la réception de la cellule OAM F3 suivante, c'est-à-dire celle de numéro P+1. A ce moment là, le dispositif de sélection 22 détermine si chaque bloc de cellules mémorisé est correct. Pour ce faire, il utilise, d'une part, la cellule OAM F3 correspondant à ce bloc (ici la cellule OAM F3 de numéro P+1) pour déterminer la validité de la charge utile des cellules du bloc et, d'autre part, les champs HEC de cellules pour déterminer la validité des en-tètes de ces cellules. Ainsi, le dispositif 22 considère un bloc comme correct si aucune erreur de transmission n'est survenue, aussi bien dans leur charge utile, que dans l'en-tête des cellules.

On notera que la vérification des blocs de cellules est effectuée en parallèle sur les deux liens de transmission, ce qui suppose que le processus de synchronisation cellules a été réalisé.

Selon un second mode de réalisation de l'invention, toujours dans le cas de transmission selon le mode dit "Cell-Based", le dispositif de sélection 22 considère dans chaque flux issu du dispositif de synchronisation 21 des blocs qui sont des sous-ensembles des blocs délimités par des cellules OAM F3 précédemment considérés. Par exemple, le dispositif de sélection 22 considère chacun des huit blocs, définis logiquement, qui sont compris entre deux cellules OAM F3 respectivement de numéro P et P + 1. La cellule OAM F3 de numéro P + 1 contient les informations sur la validité de chacun des huit blocs arrivés depuis la précédente cellule OAM F3. Ainsi, à la réception de cette cellule OAM F3 de numéro P + 1, le dispositif de sélection 22 peut sélectionner les blocs valides de l'un ou l'autre lien sur la base des informations contenues dans cette cellule.

On notera que, dans ce mode, le dispositif de sélection 22 pourrait également sélectionner, groupe de blocs après groupe de blocs, le groupe de blocs qui a été jugé valide sur la base des informations contenues dans la cellule OAM F3 correspondant à l'ensemble de blocs auquel appartient ce groupe de blocs. Un groupe de blocs est constitué d'un nombre prédéfini, par exemple, deux, trois ou plus, de blocs.

Selon un troisième mode de réalisation, dans le cas de transmission selon d'autres modes que le mode dit "Cell-Based", le dispositif 22 considère des blocs de cellules délimités par les cellules servant de marqueur temporel. Là aussi, ces cellules contiennent des informations sur les éventuelles erreurs de transmission ayant eu lieu dans les blocs qu'elles délimitent. On notera qu'il peut s'agir là de cellules du type OAM F3. Cependant, les champs de contrôle de validité transportés par les cellules OAM F3 peuvent être remplacés par tout autre type de champs de contrôle de parité, transportés dans les cellules de marquage temporel utilisées pour la synchronisation des deux liens.

Selon un quatrième mode de réalisation, également dans le cas de transmission selon d'autres modes que le mode dit "Cell-Based", le dispositif 22 considère des blocs de cellules qui sont des sous-ensembles des blocs délimités par des cellules servant de marqueurs temporel.

On va maintenant se placer dans le cas d'une transmission en mode dit "Cell-Based" et considérer le bloc de cellules Bp,1 qui est compris entre la cellule OAM F3 de numéro P et celle de numéro P + 1 et qui est porté par le lien 1. De même, on va considérer le bloc de cellules Bp,2 qui est compris entre les cellules OAM F3 de numéro P et de numéro P+1 et qui est porté par le lien 2. La méthode de sélection selon l'invention est la suivante :
· si les deux blocs B_{P,1} et B_{P,2} sont jugés corrects, alors on choisit indifféremment l'un ou l'autre bloc B_{P,1} ou B_{P,2},
· si le bloc B_{P,1} porté par le lien 2 est jugé correct alors que le bloc B_{P,2} qui est porté par lien 2 est jugé incorrect, alors on sélectionne le bloc B_{P,1},
· si, réciproquement, le bloc B_{P,2} est jugé correct et alors que le bloc B_{P,1} est jugé incorrect, alors on sélectionne le bloc B_{P,2}, et, enfin
· si les deux blocs B_{P,1} et B_{P,2} sont jugés incorrects, alors on applique une méthode de sélection dite cellule par cellule pour chaque cellule des deux blocs B_{P,1} et B_{P,2}, méthode dont un mode réalisation préférentiel est décrite ci-dessous.

On notera encore que, si le dispositif de sélection 22 considère des groupes de blocs et non des blocs, une méthode identique pourrait être mise en oeuvre à la différence qu'elle considérerait deux groupes de blocs respectivement présents sur les deux liens au lieu des deux blocs B_{P,1} et B_{P,2}.

Dans le cas où le dispositif de sélection 22 considère des blocs, sous-ensembles des blocs délimités par les cellules OAM F3, l'état correct ou incorrect de chacun des blocs, ou groupe de blocs, est déterminé à partir des informations qui sont contenues dans la cellule OAM F3 qui suit l'arrivée dudit bloc ou groupe de blocs.

Dans le cas où la transmission est d'un type autre que le mode "Cell-Based", le même processus peut être mis en oeuvre et l'état correct ou incorrect de chacun des blocs est déterminé à partir des informations qui sont contenues dans les cellules qui délimitent soit les blocs entre eux soit les ensembles de blocs.

La sélection cellule par cellule ne devrait s'appliquer que lorsque les deux blocs ou groupes de blocs de cellules reçus sur chaque lien sont incorrects. Le cas échéant, la méthode de sélection cellule par cellule permet de choisir, pour chaque cellule, le lien offrant la meilleure performance. Dans le cas où la sélection bloc par bloc, ou groupe de blocs par groupe de blocs, n'est pas utilisée, le système réalise par défaut la sélection cellule par cellule.

Selon un mode de réalisation préférentiel, pour chaque cellule d'ordre N dans un bloc émise par la sous-couche TC de l'émetteur 10, la sélection consiste à choisir entre les cellules C_{N,1} et C_{N,2} celle qui comporte le moins d'erreurs dans son en-tête. La détection des erreurs est basée sur l'utilisation du syndrome du champ HEC (Header Error Control). Le polynôme qui est utilisé, au niveau de la sous-couche de convergence de transmission de l'émetteur, pour le calcul du champ HEC permet à la fois de détecter les erreurs binaires simples ou multiples dans l'en-tête de chaque cellule, ainsi que de corriger ces erreurs lorsqu'il s'agit d'erreurs simples (un seul bit erroné).

Selon l'invention, pour effectuer la sélection de l'une ou l'autre cellule C_{N,1} ou C_{N,2,} on se base à la fois sur la valeur prise par la fonction du syndrome HEC(C_{N,X}) de la cellule C_{N,X}, mais aussi sur celle de la fonction du syndrome HEC de la cellule C_{N+1,X}. On a ainsi :
· si les syndromes HEC(C_{N,1}) et HEC(C_{N,2}) sont égaux et s'il en est de même des syndromes HEC(C_{N+1,1}) et HEC(C_{N+1,2}), choisir indifféremment l'une ou l'autre cellule,
· si les syndromes HEC(C_{N,1}) et HEC(C_{N,2}) sont égaux alors que la comparaison du syndrome HEC(C_{N+1,1}) avec le syndrome HEC(C_{N+1, 2}) montre que la cellule (C_{N +1, 1}) sur le lien (1) est moins erronée que la cellule (C_{N + 1, 2}) sur le lien (2), sélectionner la cellule C_{N,1},
· si les syndromes HEC(C_{N,1}) et HEC(C_{N,2}) sont égaux alors que la comparaison du syndrome HEC(C_{N+1,1}) avec le syndrome HEC(C_{N+1,2}) montre que la cellule (C_{N + 1,1}) sur le lien (1) est plus erronée que la cellule (C_{N + 1,2}) sur le lien (2), sélectionner la cellule C_{N,2}
· si la comparaison du syndrome HEC(C_{N,1}) avec le syndrome HEC(C_{N,2}) montre que la cellule (C_{N, 1}) sur le lien (1) est moins erronée que la cellule (C_{N, 2}) sur le lien (2), sélectionner la cellule (C_{N,1}), et enfin
· si la comparaison du syndrome HEC(C_{N,1}) avec le syndrome HEC(C_{N,2}) montre que la cellule (C_{N, 1}) sur le lien (1) est plus erronée que la cellule (C_{N, 2}) sur le lien (2), sélectionner la cellule (C_{N,2}).

HEC(C_{N,X}) est une fonction dont la valeur est représentative du caractère plus ou moins erroné de la cellule C_{N,X} avec x=1 ou x=2. Par exemple, HEC(C_{N,X}) est la fonction dont la valeur donne le nombre de bits erronés dans cette cellule. On notera que le nombre de bits erronés peut être déterminé à partir du syndrome contenu dans le champ HEC de la cellule concernée.

Dans un mode de réalisation de la présente invention, on a, par exemple, :
· HEC(C_{N,X}) = 2 si l'en-tête de la cellule C_{N,X} ne comporte aucune erreur,
· HEC(C_{N,X}) = 1 s'il n'y a qu'un seul bit erroné dans l'en-tête de la cellule C_{N,X},
· HEC(C_{N,X}) = 0 s'il y a plus d'un bit erroné dans l'en-tête de la cellule C_{N,X}.

On notera que cette valeur de la fonction HEC(C_{N,X}) est ordonnée selon la "gravité" de l'erreur. Dans l'exemple donné, plus la valeur est élevée et moins l'erreur est importante.

On a alors :
· si les syndromes HEC(C_{N,1}) et HEC(C_{N,2}) sont égaux et s'il en est de même des syndromes HEC(C_{N+1,1}) et HEC(C_{N+1,2}) alors, on choisira indifféremment l'une ou l'autre cellule,
· si les syndromes HEC(C_{N,1}) et HEC(C_{N,2}) sont égaux alors que le syndrome HEC(C_{N+1,1}) est supérieur au syndrome HEC(C_{N+1,2}) alors on sélectionnera la cellule C_{N,1},
· si les syndromes HEC(C_{N,1}) et HEC(C_{N,2}) sont égaux alors que le syndrome HEC(C_{N+1,1}) est inférieur au syndrome HEC(C_{N+1,2}) alors on sélectionnera la cellule C_{N,2}
· si le syndrome HEC(C_{N,1}) est supérieur au syndrome HEC(C_{N,2}) alors on sélectionnera la cellule C_{N,1}, et enfin
· si le syndrome HEC(C_{N,1}) est inférieur au syndrome HEC(C_{N,2}) alors on sélectionnera la cellule C_{N,2}.

On comprendra que cet ordonnancement pourrait être inverse, avec pour conséquence les inégalités ci-dessus inversées.

Le fait de tenir compte du syndrome du champ HEC des cellules C_{N} et C_{N+1} permet de ne pas sélectionner une cellule C_{N,X} dont l'en-tête serait sans erreur mais qui, suite à une coupure du lien qui la porte, aurait ses octets d'information qui seraient erronés. On comprendra que, dans ce cas, la cellule C_{N+1,X} serait erronée.

Dans le premier cas où l'on choisira indifféremment l'une ou l'autre cellule, on choisira de préférence la cellule C_{N,X} qui est portée par le même lien que la cellule C_{N-1,X} qui a été précédemment choisie.

L'avantage de cette méthode est de tenir compte du syndrome de HEC des cellules C_{N} et C_{N+1}, comme on vient de le voir, mais également de différencier des cellules qui n'ont qu'une erreur simple (un seul bit erroné) et des cellules qui ont une erreur multiple (plusieurs bits erronés).

## Revendications

1. Procédé de sécurisation de la transmission de cellules d'un système de télécommunication, ledit procédé consistant, côté émetteur, à émettre simultanément deux flux de cellules identiques sur deux liens physiques distincts et, côté récepteur, à recevoir chacun des deux flux de cellules respectivement émis sur lesdits deux liens et à en sélectionner un, **caractérisé en ce qu'**il consiste de plus, côté émetteur, à insérer, régulièrement dans chacun desdits flux, des cellules servant de marqueurs et délimitant ainsi des blocs de cellules ou des ensembles de blocs de cellules, lesdits blocs ou ensembles de blocs comportant chacun une cellule contenant des informations concernant les erreurs dans ledit bloc ou dans chacun desdits blocs dudit ensemble et, côté récepteur, à sélectionner, bloc après bloc ou groupe de blocs après groupe de blocs, le bloc ou le groupe de blocs de l'un desdits flux dont l'examen des informations d'erreurs le concernant contenues dans ladite cellule montre qu'il présente le moins d'erreurs de la manière suivante :
· si les deux blocs (B_{P,1} et B_{P,2}) ou groupes de blocs appartenant respectivement aux deux liens sont jugés corrects, à choisir indifféremment l'un ou l'autre bloc B_{P,1} ou B_{P,2},
· si le bloc (B_{P,1}) ou groupe de blocs porté par le premier lien (1) est jugé correct alors que le bloc (B_{P,2}) ou groupe de blocs qui est porté par le second lien (2) est jugé incorrect, à sélectionner le bloc (B_{P,1}) porté par le premier lien (1),
· si, réciproquement, le bloc (B_{P,2}) ou groupe de blocs porté par le second lien (2) est jugé correct alors que le bloc (B_{P,1}) ou groupe de blocs porté par le premier lien (1) est jugé incorrect, à sélectionner le bloc (B_{P,2}) ou groupe de blocs porté par le second lien (2), et, enfin
· si les deux blocs (B_{P,1} et B_{P,2}) ou groupes de blocs sont jugés incorrects, à utiliser un autre processus de sélection que le processus de sélection bloc à bloc ou groupe de blocs après groupe de blocs.

2. Procédé de sécurisation selon la revendication 1, **caractérisé en ce que** ledit autre processus de sélection consiste à effectuer une sélection dite cellule par cellule pour chaque cellule contenue dans chacun desdits deux blocs (B_{P,1} et B_{P,2}) ou groupes de blocs, ladite sélection cellule à cellule étant basée sur l'utilisation d'informations d'erreurs contenues, d'une part, dans l'en-tête de la cellule courante et, d'autre part, dans l'en-tête de la cellule suivante.

3. Procédé de sécurisation selon la revendication 2, **caractérisé en ce que** lesdites informations d'erreurs sont constituées du syndrome du champ dit HEC contenu dans l'en-tête de chacune des cellules.

4. Procédé de sécurisation selon la revendication3, **caractérisé en ce que** ladite sélection cellule à cellule consiste à :
· si les syndromes HEC(C_{N,1}) et HEC(C_{N,2}) sont égaux et s'il en est de même des syndromes HEC(C_{N+1,1}) et HEC(C_{N+1,2}), choisir indifféremment l'une ou l'autre cellule,
· si les syndromes HEC(C_{N,1}) et HEC(C_{N,2}) sont égaux alors que la comparaison du syndrome HEC(C_{N+1,1}) avec le syndrome HEC(C_{N+1, 2}) montre que la cellule (C_{N + 1, 1}) sur le lien (1) est moins erronée que la cellule (C_{N + 1, 2}) sur le lien (2), sélectionner la cellule C_{N,1},
· si les syndromes HEC(C_{N,1}) et HEC(C_{N,2}) sont égaux alors que la comparaison du syndrome HEC(C_{N+1,1}) avec le syndrome HEC(C_{N+1,2}) montre que la cellule (C_{N + 1,1}) sur le lien (1) est plus erronée que la cellule (C_{N + 1,2}) sur le lien (2), sélectionner la cellule C_{N,2}
· si la comparaison du syndrome HEC(C_{N,1}) avec le syndrome HEC(C_{N,2}) montre que la cellule (C_{N, 1}) sur le lien (1) est moins erronée que la cellule (C_{N, 2}) sur le lien (2), sélectionner la cellule (C_{N,1)}, et enfin
· si la comparaison du syndrome HEC(C_{N,1}) avec le syndrome HEC(C_{N,2}) montre que la cellule (C_{N, 1}) sur le lien (1) est plus erronée que la cellule (C_{N, 2}) sur le lien (2), sélectionner la cellule (C_{N,2}),
HEC(C_{N,X}) est une fonction dont la valeur est représentative du caractère plus ou moins erroné de la cellule C_{N,X}, C_{N,X} étant la cellule d'ordre N dans le bloc considéré et x étant le numéro du lien sur lequel ladite cellule est portée.

5. Procédé de sécurisation selon une des revendications précédentes, **caractérisé en ce que**, dans le cas où la sélection bloc à bloc ou groupe de blocs à groupe de blocs n'est pas utilisée à un moment donné, il consiste à effectuer une sélection cellule à cellule.

6. Procédé de sécurisation selon une des revendications précédentes, **caractérisé en ce qu'**il consiste, côté émetteur, à insérer régulièrement dans chacun desdits flux, des cellules possèdant un numéro d'ordre lequel est utilisé pour synchroniser les flux issus respectivement des deux liens (1 et 2).

7. Procédé de sécurisation selon une des revendications précédentes, **caractérisé en ce qu'**il consiste à utiliser lesdites cellules physiques contenant les informations d'erreurs en tant que cellules servant de marqueur de bloc.

8. Procédé de sécurisation selon la revendication 7, appliqué à un système de télécommunication dont la transmission des cellules sur chacun des liens se fait en mode cellules (cell based), **caractérisé en ce qu'**il consiste à utiliser en tant que cellules servant de marqueur de bloc, les cellules dites OAM F3.

## Patentansprüche

1. Verfahren zur Sicherung der Übertragung von Zellen eines Telekommunikationssystems, wobei das Verfahren senderseitig darin besteht, gleichzeitig zwei identische Zellflüsse auf zwei unterschiedlichen physischen Verbindungen zu entsenden, und empfängerseitig darin besteht, jeden der beiden Zellflüsse, die jeweils auf den beiden Verbindungen entsendet wurden, zu empfangen und einen von ihnen auszuwählen, **dadurch gekennzeichnet, daß** es ferner senderseitig darin besteht, regelmäßig in einen der Flüsse Zellen einzusetzen, die als Marker dienen und somit Zellblöcke oder Zellblockgruppen begrenzen, wobei die Blöcke oder Blockgruppen jeweils eine Zelle umfassen, die Informationen über die Fehler in dem Block oder in jedem der Blöcke der Gruppe enthalten, und senderseitig darin besteht, Block für Block oder Blockgruppe für Blockgruppe den Block oder die Blockgruppe eines der Flüsse auszuwählen, bei dem die Studie der in der Zelle enthaltenen, ihn betreffenden Fehlerinformationen zeigt, daß er die wenigsten Fehler aufweist, und zwar folgendermaßen:
- wenn beide Blöcke (B_{P,1} und B_{P,2}) oder Blockgruppen, die jeweils beiden Verbindungen angehören, für korrekt beurteilt werden, ist unterschiedslos der eine oder der andere Block B_{P,1} oder B_{P,2} zu wählen,
- wenn der Block (B_{P,1}) oder die Blockgruppe, die von der ersten Verbindung (1) getragen wird, für korrekt beurteilt wird, während der Block (B_{P,2}) oder die Blockgruppe, die von der zweiten Verbindung (2) getragen wird, für unkorrekt beurteilt wird, ist der Block (B_{P,1}) zu wählen, der von der ersten Verbindung (1) getragen wird,
- wenn umgekehrt der Block (B_{P,2}) oder die Blockgruppe, die von der zweiten Verbindung (2) getragen wird, für korrekt beurteilt wird, während der Block (B_{P,1}) oder die Blockgruppe, die von der ersten Verbindung (1) getragen wird, für unkorrekt beurteilt wird, ist der Block (B_{P,2}) oder die Blockgruppe, die von der zweiten Verbindung (2) getragen wird, zu wählen, und schließlich
- wenn beide Blöcke (B_{P,1}, B_{P,2}) oder Blockgruppen für unkorrekt beurteilt werden, ist ein anderes Auswahlverfahren als das Auswahlverfahren Block für Block oder Blockgruppe für Blockgruppe zu verwenden.

2. Sicherungsverfahren nach Anspruch 1, **dadurch gekennzeichnet, daß** das andere Auswahlverfahren darin besteht, eine sogenannte Auswahl Zelle für Zelle für jede in jedem der beiden Blöcke (B_{P,1} und B_{P,2}) oder Blockgruppen enthaltene Zelle durchzuführen, wobei die Auswahl Zelle für Zelle auf der Verwendung von Fehlerinformationen beruht, die einerseits im Kopf der laufenden Zelle und andererseits im Kopf der folgenden Zelle enthalten sind.

3. Sicherungsverfahren nach Anspruch 2, **dadurch gekennzeichnet, daß** die Fehlerinformationen von dem Syndrom des sogenannten HEC-Feldes, das im Kopf jeder der Zellen enthalten ist, gebildet sind.

4. Sicherungsverfahren nach Anspruch 3, **dadurch gekennzeichnet, daß** die Auswahl Zelle für Zelle darin besteht:
- wenn die Syndrome HEC(C_{N,1}) und HEC(C_{N,2}) gleich sind und wenn auch Syndrome HEC(C_{N+1,1}) und HEC(C_{N+1,2}) vorhanden sind, unterschiedslos die eine oder die andere Zelle zu wählen,
- wenn die Syndrome HEC(C_{N,1}) und HEC(C_{N,2}) gleich sind, während der Vergleich des Syndroms HEC(C_{N+1,1}) mit dem Syndrom HEC(C_{N+1,2}) zeigt, daß die Zelle (C_{N+1,1}) auf der Verbindung (1) weniger fehlerhaft als die Zelle (C_{N+1,2}) auf der Verbindung (2) ist, die Zelle C_{N,1} auszuwählen,
- wenn die Syndrome HEC(C_{N,1}) und HEC(C_{N,2}) gleich sind, während der Vergleich des Syndroms HEC(C_{N+1,1}) mit dem Syndrom HEC(C_{N+1,2}) zeigt, daß die Zelle (C_{N+1,1}) auf der Verbindung (1) fehlerhafter ist als die Zelle (C_{N+1,2}) auf der Verbindung (2), die Zelle C_{N,2} auszuwählen,
- wenn der Vergleich des Syndroms HEC(C_{N,1}) mit dem Syndrom HEC(C_{N,2}) zeigt, daß die Zelle (C_{N,1}) auf der Verbindung (1) weniger fehlerhaft ist als die Zelle (C_{N,2}) auf der Verbindung (2) , die Zelle (C_{N,1}) auszuwählen, und schließlich
- wenn der Vergleich des Syndroms HEC(C_{N,1}) mit dem Syndrom HEC(C_{N,2}) zeigt, daß die Zelle (C_{N,1}) auf der Verbindung (1) fehlerhafter ist als die Zelle (C_{N,2}) auf der Verbindung (2), die Zelle (C_{N,2}) auszuwählen.
HEC(C_{N,X}) ist eine Funktion, deren Wert für den mehr oder weniger fehlerhaften Charakter der Zelle C_{N,X} repräsentativ ist, wobei C_{N,X} die Zelle der Ordnung N in dem betreffenden Block und X die Nummer der Verbindung ist, auf der die Zelle getragen wird.

5. Sicherungsverfahren nach einem der vorhergehenden Ansprüche, **dadurch gekennzeichnet, daß** es, falls die Auswahl Block für Block oder Blockgruppe für Blockgruppe nicht zu einem gegebenen Zeitpunkt verwendet wird, darin besteht, eine Auswahl Zelle für Zelle durchzuführen.

6. Sicherungsverfahren nach einem der vorhergehenden Ansprüche, **dadurch gekennzeichnet, daß** es darin besteht, senderseitig regelmäßig in jeden der Flüsse Zellen einzusetzen, die eine Ordnungszahl besitzen, die zur Synchronisierung der jeweils aus den beiden Verbindungen (1 und 2) kommenden Flüsse verwendet werden.

7. Sicherungsverfahren nach einem der vorhergehenden Ansprüche, **dadurch gekennzeichnet, daß** es darin besteht, die physischen Zellen zu verwenden, die die Fehlerinformationen als Zellen, die als Blockmarker dienen, enthalten.

8. Sicherungsverfahren nach Anspruch 7, das für ein Telekommunikationssystem angewandt wird, dessen Übertragung der Zellen auf jeder der Verbindungen im Zellmodus (cell based) erfolgt, **dadurch gekennzeichnet, daß** es darin besteht, als Zellen, die als Blockmarker dienen, die sogenannten OAM F3-Zellen zu verwenden.

## Claims

1. Process for securing the transmission of cells from a telecommunication system, the said process consisting, on the transmitting side, of transmitting two identical flows of cells over two distinct physical connections and, on the receiving side, of receiving each of the two flows of cells emitted respectively on the said two connections and selecting one of them, **characterised in that** it consists moreover, on the transmitting side, of regularly inserting into each of the said flows, cells serving as markers and thus demarcating blocks of cells or collections of blocks of cells, the said blocks or collection of blocks each consisting of a cell containing information concerning errors in the said block or in each of the said blocks of the aforestated collection and, on the receiving side, of selecting, block after block or group of blocks after group of blocks, the block or the group of blocks from one of the said flows the examination for errors of information of which contained in the said cell shows that it has the least errors in the following manner:
- if the two blocks (B_{p,1} and B_{p,2}) or groups of blocks belonging respectively to the two connections are judged to be correct, to indiscriminately choose one or other block B_{p,1} or B_{p,2},
- if block (B_{p,1}) or group of blocks carried by the first connection (1) is judged to be correct whilst block (B_{p,2}) or group of blocks which are carried by the second connection (2) is judged to be incorrect, block (B_{p,1}) carried by the first connection is to be selected,
- if reciprocally, block (B_{p,2}) or group of blocks carried by the second connection (2) is judged to be correct whilst block (B_{p,1}) or group of blocks carried by the first connection (1) is judged to be incorrect, block (B_{p,2}) or group of blocks carried by the second connection (2) is to be selected, and finally,
- if the two blocks (B_{p,1} and B_{p,2}) or group of blocks are judged to be incorrect, a selection process other than the block by block or group by group selection process is to be used.

2. Securing process in accordance with claim 1, **characterised in that** the said other selection process consists of carrying out a selection called cell to cell for each cell contained in each of the said two blocks (B_{p,1} and B_{p,2}) or group of blocks, the said cell by cell selection being based on the use of error information contained, on the one hand, in the header of the current cell and on the other hand, in the header of the following cell.

3. Securing process in accordance with claim 2, **characterised in that** the said error information is made up of a field syndrome called HEC contained within the header of each of the cells.

4. Securing process in accordance with claim 3, **characterised in that** the said cell to cell selection consists in:
- if the HEC(C_{N,1}) and HEC(C_{N,2}) syndromes are equal and if it is the same for HEC(C_{N+1,1}) and HEC(C_{N+1,2}) syndromes one or other cell can be chosen indiscriminately,
- if HEC(C_{N,1}) and HEC(C_{N,2}) syndromes are equal whilst the comparison of the HEC(C_{N+1,1}) syndrome with the HEC(C_{N+1,2}) syndrome shows that cell (C_{N+1,1}) on connection (1) is less erroneous than cell (C_{N+1,2}) on connection (2), then cell (C_{N,1}) is to be selected.
- if HEC(C_{N,1}) and HEC(C_{N,2}) syndromes are equal whilst the comparison of syndrome HEC(C_{N+1,1}) with HEC(C_{N+1,2}) shows that cell (C_{N+1,1}) on connection (1) is more erroneous than cell (C_{N+1,2}) on connection (2), then cell (C_{N,2}) is to be selected,
- if the comparison of syndrome HEC(C_{N,1}) with syndrome HEC(C_{N,2}) shows that cell (C_{N,1}) on connection (1) is less erroneous than cell (C_{N,2}) on connection (2), then cell (C_{N,1}) is to be selected and finally,
- if the comparison of syndrome HEC(C_{N,1}) with syndrome HEC(C_{N,2}) shows that cell (C_{N,1}) on connection (1) is more erroneous than cell (C_{N,2}) on connection (2), then cell (C_{N,2}) is to be selected, HEC(C_{N,X}) is a function the value of which is representative of the more or less erroneous character of cell C_{N,X,} C_{N,X} being the cell of the nth order in the block in question and X being the number of the connection on which the said cell is carried.

5. Securing process in accordance with one of the preceding claims, **characterised in that**, in the case where the block by block or group of blocks by group of blocks selection is not used at a given moment then a cell by cell selection is undertaken.

6. Securing process in accordance with one of the preceding claims, **characterised in that** it consists, on the transmitting side of regularly inserting into each of the two flows, cells possessing a number, the order of which is used to synchronise the flows emanating from the two connections (1 and 2) respectively.

7. Securing process in accordance with one of the preceding claims, **characterised in that** it consists of using the said physical cells containing error information as cells serving as block markers.

8. Securing process in accordance with claim 7, applied to a telecommunication system the transmission of cells of which on each of the connections is cell based, **characterised in that** it consists of using cells called OAM F3 as cells serving as block markers.
